# EUROPEAN PATENT SPECIFICATION

(11) **EP 2 786 924 B1**
(45) Date of publication and mention of the grant of the patent: **07.09.2016**
(21) Application number: 12853256.1
(22) Date of filing: 27.11.2012
(51) Int. Cl.: B62K 11/10, B62K 19/20, B62K 19/28

(54) **FRAME STRUCTURE OF SCOOTER-TYPE VEHICLE**
RAHMENSTRUKTUR FÜR MOTORROLLER
STRUCTURE DE CADRE D'UN VÉHICULE TYPE SCOOTER

(30) Priority: 02.12.2011 JP 2011265023
(43) Date of publication of application: 08.10.2014
(73) Proprietor: Honda Motor Co., Ltd., Minato-ku Tokyo 107-8556 (JP)
(72) Inventor: TAKENAKA, Masahiko, Wako-shi Saitama 351-0193 (JP)
(74) Representative: Quinterno, Giuseppe
(86) International application number: PCT/JP2012/080571
(87) International publication number: WO 2013/080952

(56) References cited:
- JP-A- 2002 173 071
- JP-A- 2008 143 377
- JP-A- 2008 279 959
- JP-U- S5 773 287

## Description

### TECHNICAL FIELD

The present invention relates to an improvement in a frame structure of a scooter-type vehicle according to the preamble of claim 1, which is known from JP 2008 279959 A.

### BACKGROUND ART

Use of a cross pipe bridging a left frame and a right frame in order maintain rigidity in scooter-type vehicles is well-known.

The body frame for a scooter-type vehicle disclosed in JP 2008 279959 A is provided with a cross pipe connected to the rear-end of a lower frame. The cross pipe supports the front-end of a rear frame pipe.

The cross pipe extends in a straight line in the lateral direction and supports a left lower frame and the rear frame pipe, as well as supporting a right lower frame and the rear frame pipe.

In order to improve fuel economy, in recent years it has been desirable to reduce the thickness and weight of the frame. However, when simply reducing the thickness of the frame, the strength and rigidity of the frame may be reduced, stresses produced in the frame may increase, and other problems may occur. Additionally, as disclosed in the above mentioned document, since the lower frame and the rear frame pipe are both joined to the cross pipe, the loads acting on the lower frames and the rear frame pipe concentrate at the cross pipe. Because the loads of two members are concentrated at the cross pipe, a simple means for making the cross pipe thinner is not readily devised.

Technology for reducing the concentration of loads at the cross pipe is accordingly needed.

### SUMMARY OF INVENTION

### TECHNICAL PROBLEM

It is an object of the present invention to provide a frame structure of a scooter-type vehicle that can prevent excessive concentration of load at the cross pipe.

### SOLUTION TO PROBLEM

According to a first aspect of the invention, there is provided a frame structure for a scooter-type vehicle, as defined in claim 1.

According to a second aspect of the invention, preferably an entire circumference of the end parts of the cross pipe is joined to a laterally outer surface and a laterally inner surface of the rear-end parts of the lower frames, and is joined to a laterally outer surface and a laterally inner surface of the front-end parts of the rear frames.

According to a third aspect of the invention, the lower frames preferably comprise a front-end joining part joined to a lower end of the main pipe; a rear-end joining part joined to a part of the rear frames and an end circumference of the cross pipe; and an intermediate part provided to an area between the front-end joining part and the rear-end joining part, a height of the intermediate part being smaller than a height of the rear-end joining part.

According to a fourth aspect of the invention, preferably a stowing-part-supporting member for supporting a stowing part for stowing objects is joined to the rear-end parts of both of the left and right lower frames separately from the cross pipe; and the stowing-part-supporting member is positioned over the cross pipe as viewed from above the vehicle.

According to a fifth aspect of the invention, the main pipe preferably comprises an expanding tube part expanding in the lateral direction to the lower end, the front-end joining part of the lower frames being welded to left and right lateral surfaces of the expanding tube part.

According to a sixth aspect of the invention, preferably a line is drawn from a center point of a front wheel to a center of a hole in a left pivot-joining part, the front wheel being rotatably attached to a lower end of the front fork, and the left pivot-joining part being welded to the front-end part of the left rear frame in order to support an engine; and a line is drawn from the center point to a center of a hole in a right pivot-joining part welded to the front-end part of the right rear frame in order to support the engine, whereby the left hole center, the center point of the front wheel, and the right hole center are linked into a V-shape; and the intermediate parts of the left and right lower frames are parallel to the lines of the V-shape.

### ADVANTAGEOUS EFFECTS OF INVENTION

According to the first aspect of the invention, at least one part of the lower frames and at least one part of the rear frames are joined directly to each other by welding in addition to the joining of the lower frames and the rear frames to the cross pipe. When loads are applied to the lower frames and the rear frames, these loads are not received solely by the cross pipe but also by both the lower frames and the rear frames, and therefore loads can be prevented from concentrating excessively at the cross pipe.

According to the second aspect of the invention, the entire circumference of the end part of the cross pipe is joined to the outer surface and the inner surface of the rear-end part of the lower frames, and to the outer surface and the inner surface of the front-end part of the rear frames. In other words, the lower frames and the rear frames cover the entire circumference of the end part of the cross pipe and are joined to the cross pipe. The cross pipe is reinforced by the lower frames and the rear frames, and therefore the cross pipe can be made thinner.

According to the third aspect of the invention, the height of the intermediate part in the lower frames is made smaller than the height of the rear-end joining part. The rear-end joining part is joined to other members, and the rigidity must therefore be increased. The height is increased, and the rigidity is increased. Increased rigidity is not necessary for the intermediate part, and the height thereof is reduced. When the intermediate part and the rear-end joining part are made to have the same height for hypothetical purposes, the lower frames are increased in size and weight, but when the height of the intermediate part is made smaller, as in the present invention, the size and weight of the lower frames are reduced.

According to the fourth aspect of the invention, the stowing-part-supporting member is joined to both the rear-end parts of the lower frames, and, when viewed from above the vehicle, the stowing-part-supporting member is positioned over the cross pipe. Downward loads resulting from the stowing part are supported by the stowing-part-supporting member. The stowing-part-supporting member is supported by the rear-end parts of the lower frames and the cross pipe. When the stowing-part-supporting member is supported by the intermediate parts of the lower frames or the intermediate parts of the rear frames for hypothetical purposes, the rigidity of the lower frames or the rear frames must be increased.

In the present invention, the stowing-part-supporting member is supported by the rear-end parts of the lower frames, which have increased rigidity, and the cross pipe, which has high rigidity and is reinforced by the lower frames and the rear frames. The rigidity of the cross pipe, the lower frames, and the rear frames therefore need not be further increased, and increases in the weight of these components can be limited.

According to the fifth aspect of the invention, the main pipe includes the expanding tube part, which opens outward in the lateral direction at the bottom end. The cross-sectional area of the expanding tube part is larger than the cross-sectional area near the header-pipe connection of the main pipe, and therefore stress generated at the lower end of the main pipe is reduced. As a result, the main pipe can be made thinner and lighter. The cross-sectional area of the lower end of the main pipe is increased, and therefore the main pipe and the lower frames need not be reinforced. A frame structure that can be lightened without reinforcement can therefore be provided.

According to the sixth aspect of the invention, when viewed from above the vehicle, drawing a line from the center point of the front wheel to the center of the hole of the left pivot joining part, and from the center point to the center of the hole of the right pivot joining part, links the left hole center, the center point of the front wheel, and the right hole center into a V-shape, the intermediate parts of the left and right lower frames being parallel to the respective V-shaped lines.

Since the V-shaped lines are parallel to the respective intermediate parts of the lower frames, when lateral loads are applied to the vertex of the V-shape (the front-wheel center point), a tensile force acts on the intermediate part of one of the lower frames, and a compressive force acts on the intermediate part of the other lower frame. Since force is applied to the intermediate parts as an axial force along the center line of the intermediate part of the lower frame, the lower frames do not appreciably bend, and deformations of the left and right lower frames can be limited.

### BRIEF DESCRIPTION OF DRAWINGS

FIG. 1 is a left-side view of a scooter-type vehicle in which the frame structure according to the present invention is employed;
FIG. 2 is a perspective view of a vehicle frame of the vehicle;
FIG. 3 is an exploded perspective view exploded from the main pipe to the lower frame of the frame structure;
FIG. 4 is a front view of the lower part of the main pipe;
FIG. 5 is a cross-sectional view taken along line 5-5 of FIG. 4;
FIG. 6 is a front view of the welded parts between the main pipe and the lower frames;
FIG. 7 is a perspective view as seen in the direction of arrow 7 of FIG. 2;
FIG. 8 is a cross-sectional view taken along line 8-8 of FIG. 7;
FIG. 9 is an exploded perspective view of the vicinity of the cross pipe of the frame structure;
FIG. 10 is a view of a trial fitting of the cross pipe;
FIG. 11 is a perspective view as seen in the direction of arrow 11 of FIG. 2;
FIG. 12 is a cross-sectional view taken along line 12-12 of FIG. 11;
FIG. 13 is a perspective view as seen in the direction of arrow 13 of FIG. 2;
FIG. 14 is a cross-sectional view taken along line 14-14 of FIG. 11; and
FIG. 15 is a schematic diagram of the shape of the intermediate parts of the lower frames as seen from above.

### DESCRIPTION OF EMBODIMENTS

Embodiments of the present invention are described below with reference to the accompanying drawings. The terms "front," "rear," "left," "right," "up," and "down" in the description below represent directions with respect to a rider sitting in the rider's seat.

### EMBODIMENTS

A scooter-type vehicle according to the present invention will be described with reference to the drawings.

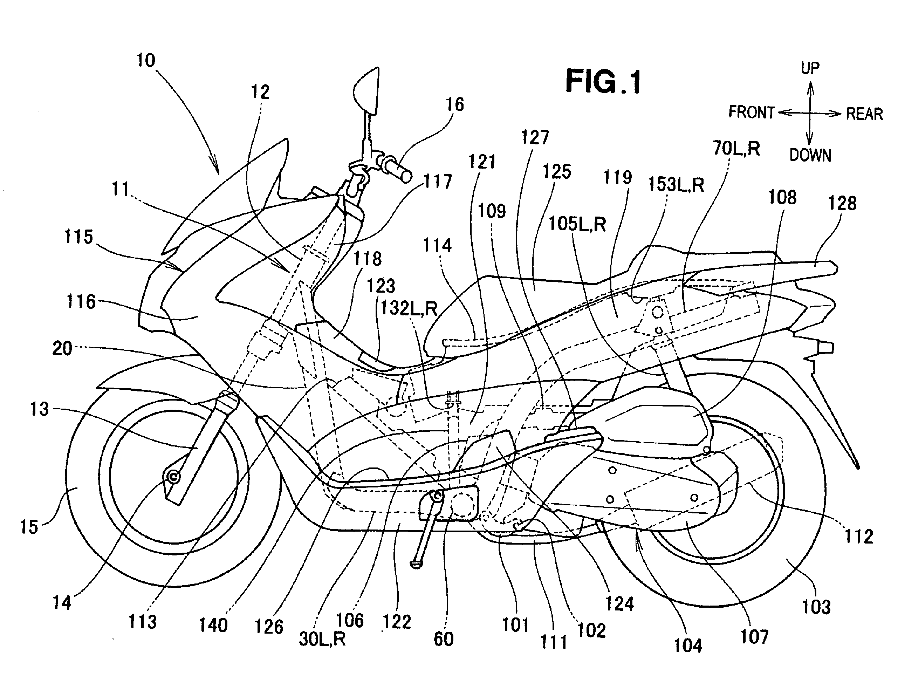

As shown in FIG. 1, a scooter-type vehicle 10 has a front fork 13 that is steerably supported by a header pipe 12 of a vehicle frame 11 (described in detail hereinafter); a front wheel 15 attached to a front axle 14 rotatably provided to the lower end of the front fork 13; handles 16 connected to the upper end of the front fork 13 for the driver to grip and steer the front wheel 15; a lower frame 30L ("L" is a suffix indicating left; cases below are identical and more detail is provided hereinafter) extending toward the rear, the front end of which is joined to the lower end of a main pipe 20 (described in detail hereinafter) that extends downward from the header pipe 12 toward the rear of the vehicle; a rear frame 70L (described in detail hereinafter) extending upward and toward the rear, the front end of which is joined to a cross pipe 60 (described in detail hereinafter) that is joined to the rear end of the lower frame 30L; a power unit 104 that doubles as a swing arm and is provided with a rear wheel 103 on the rear end, the power unit 104 being held in place by an engine hanger link 101 so as to be able to pivot via a pivot axle 102, where the engine hanger link 101 is connected to a lower part of the front end of the rear frame 70L,; and a rear cushion 105L, the lower end of which is attached to the rear end of the power unit 104, the upper end of which is supported by the rear part of the rear frame 70L, and which absorbs loads acting on the rear wheel 103.

The power unit 104 is composed of an engine 106 that is pivotably connected to the engine hanger link 101, and a transmission 107, which is formed integrally with the engine 106, transmits the power of the engine 106 to the rear wheel 103, and includes a gear-shifting mechanism.

An intake system, which has an air cleaner 108 and a carburetor 109, and an exhaust system, which has an exhaust pipe 111 and a muffler 112, are connected to the cylinder head of the engine 106.

A fuel tank 113 is positioned to the rear of the main pipe 20, and a stowing part 114 for stowing helmets and other items is positioned behind and above the fuel tank 113. The stowing part 114 is supported by the rear end of the lower frame 30L and the rear part of the rear frame 70L.

The vehicle frame 11 is covered by a vehicle cover 115. The vehicle cover 115 is composed of a front cover 116 for covering the front area of the vehicle frame 11; an upper inner cover 117 for covering the rear area of the front cover 116; a lower inner cover 118, which is provided adjoining the upper inner cover 117, for covering the upper area of the fuel tank 113; a rear cover 119, which is provided adjoining the rear end of the lower inner cover 118, for covering the lateral area of the rear part of the rear frame 70L; a middle cover 121, which is provided adjoining the lower area of the front cover 116 and the rear cover 119, for covering the lateral area of the fuel tank 113 and the engine 106; and a lower cover 122, which is provided adjoining the front cover 116 and the middle cover 121, for covering the lower and lateral areas of the lower part of the vehicle frame 11.

An oil-supply lid 123 is provided to the upper part of the lower inner cover 118 so as to be able to open and close, as well as allow attachment and detachment of the oil-supply cap of the fuel tank 113. A maintenance lid 124, which is used during maintenance, is also provided to the leftward part of the middle cover 121 so as to be able to open and close.

A seat 125, on which the driver and an accompanying passenger sit, is positioned so as to cover the stowing part 114. A step 126, where the feet of the rider are placed, is positioned below the seat 125 in the heightwise direction and between the handles 16 and the seat 125.

A pillion step 127, on which the feet of the accompanying passenger are placed, is attached behind the step 126, and a grab rail 128, which is grasped by the accompanying passenger, is provided so as to encircle the rear part of the seat 125.

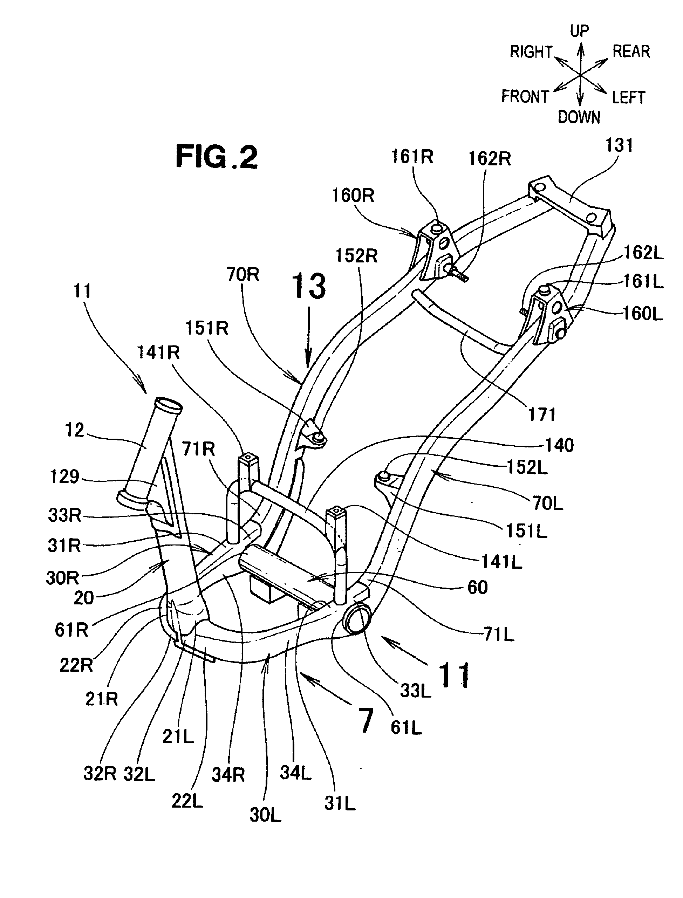

The structure of the vehicle frame 11 will be described in detail with reference to FIG. 2.

As shown in FIG. 2, the vehicle frame 11 is composed of the header pipe 12; the hollow main pipe 20, the upper-end part of which is reinforced by a reinforcing member 129 and which extends from the header pipe 12 downward toward the rear of the vehicle; a pair of left and right lower frames 30L, R ("R" is a suffix indicating right; cases below are identical) that both extend to the rear from lower-end lateral surfaces 21L, R of the main pipe 20, where front-end parts 22L, R of the lower frames are both joined to the lower-end lateral surfaces 21L, R; the cross pipe 60, which extends in a lateral direction and is joined to a rear-end part 31L of the lower frame 30L and a rear-end part 31R of the lower frame 30R; a pair of left and right rear frames 70L, R that extend upward and to the rear and are joined to the respective rear-end parts 31L, R of the lower frames 30L, R and to the cross pipe 60; and a rear cross member 131 that extends in a lateral direction and is joined to the rear end of the rear frame 70L and the rear end of the rear frame 70R.

The lower frame 30L has a front-end joining part 32L that is provided to the front-end part 22L and is joined to the lower-end lateral surface 21L of the main pipe 20; a rear-end joining part 33L that is provided to the rear-end part 31L and is joined to a front-end part 71L of the rear frame 70L and an end circumferential surface 61L of the cross pipe 60; and an intermediate part 34L provided to an area between the front-end joining part 32L and the rear-end joining part 33L. The lower frame 30R has a front-end joining part 32R that is provided to the front-end part 22R and is joined to the lower-end lateral surface 21R of the main pipe 20; a rear-end joining part 33R that is provided to the rear-end part 31R and is joined to a front-end part 71R of the rear frame 70R and an end circumferential surface 61R of the cross pipe 60; and an intermediate part 34R provided to an area between the front-end joining part 32R and the rear-end joining part 33R.

Besides the cross pipe 60, a U-shaped stowing-part-supporting member 140 for supporting the front parts (FIG. 1, signs 132L, R) of the stowing part (FIG. 1, sign 114) is also joined to the rear-end part 31L of the lower frame 30L and the rear-end part 31R of the lower frame 30R. Fastening mounts 141L, R for fastening the stowing part are provided to the upper left and right ends of the stowing-part-supporting member 140.

Stowing-part-intermediate stays 151L, R for supporting the intermediate area in the front-to-rear direction of the stowing part are further provided to respective front-part inner lateral surfaces of the rear frames 70L, R. Cushion rubber parts 152L, R are provided to respective upper surfaces of the stowing-part-intermediate stays 151L, R.

A bracket 160L for supporting the rear part (FIG. 1, sign 153L) of the stowing part is joined to the rear part of the rear frame 70L, and a bracket 160R for supporting the rear part (FIG. 1, sign 153R) of the stowing part is joined to the rear part of the rear frame 70R. Cushion rubber [parts] 161L, R are provided to respective upper surfaces of the brackets 160L, R. In other words, the stowing part is supported by the stowing-part-supporting member 140, the stowing-part-intermediate stays 151L, R, and the brackets 160L, R.

Since cushion bolts 162L, R for supporting the rear cushions (FIG. 1, signs 105L, R) are welded to brackets 160L, R, the brackets 160L, R double as members for supporting the rear part of the stowing part and the rear cushions.

An intermediate cross member 171 that extends in the lateral direction is joined to an intermediate part in the front-to-back direction of the rear frame 70L and an intermediate part in the front-to-back direction of the rear frame 70R.

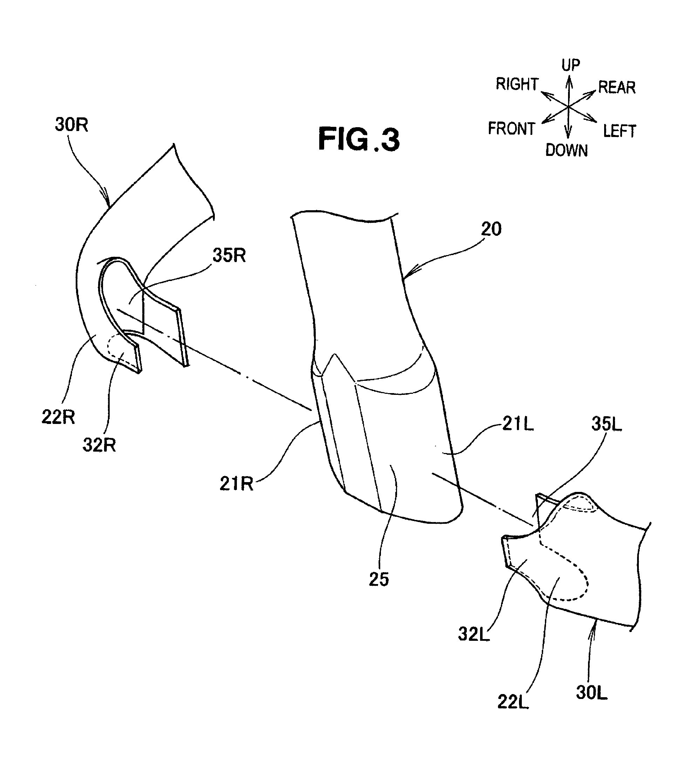

The fitting structure of the lower end of the main pipe 20 and the front-end joining parts 32L, R of the lower frames 30L, R will be described with reference to FIG. 3.

As shown in FIG. 3, a fitting-pocket part 35L for fitting to the lower-end lateral surface 21L of the main pipe 20 is formed on the front-end joining part 32L of the lower frame 30L. A fitting-pocket part 35R for fitting to the lower-end lateral surface 21R of the main pipe 20 is formed on the front-end joining part 32R of the lower frame 30R. The front-end joining parts 32L, R fit to the lower-end lateral surfaces 21L, R so that the lower-end lateral surfaces 21L, R of the main pipe 20 enter the fitting-pocket parts 35L, R.

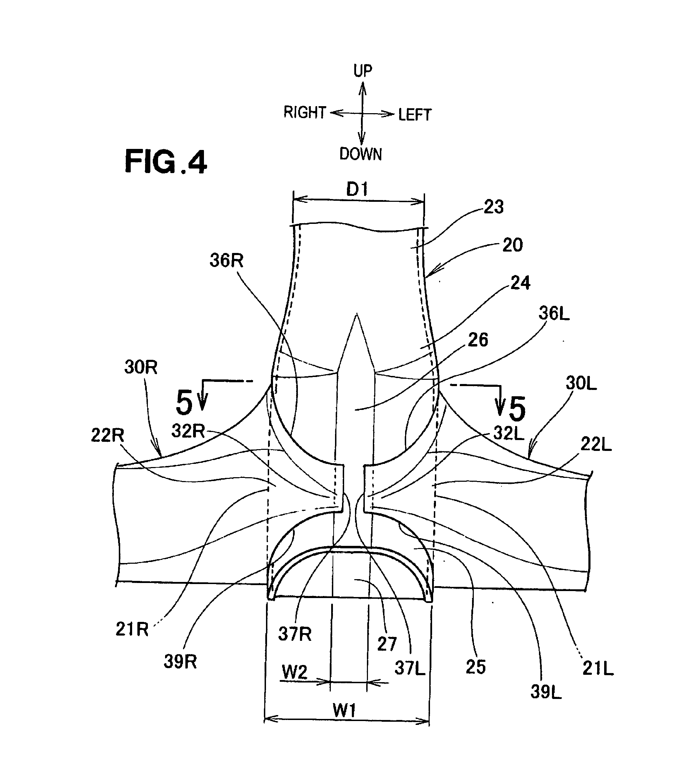

The structure of the lower end of the main pipe 20 will be described with reference to FIG. 4.

As shown in FIG. 4, the front-end joining parts 32L, R of the lower frames 30L, R are fit to the lower end of the main pipe 20. The main pipe 20 includes a straight tube part 23 that has a constant diameter D1 and is on the side joined to the header pipe (FIG. 2, sign 12); a fan-shaped pipe 24 that is provided to be continuous with the lower end of the straight tube part 23 and is formed to fan out toward bottom of the vehicle; and an expanding tube part 25 (described in detail hereinafter) that opens out in the lateral direction so as to have a width W1, which is wider than the diameter D1 of the straight tube part 23 when viewed from the front.

A front flat surface 26 (described in detail hereinafter) having a constant width W2 is also provided to the front surface of the expanding tube part 25 along the longitudinal direction of the main pipe 20. A rear flat surface 27 (described in detail hereinafter) having the constant width W2 is also provided to the rear surface of the expanding tube part 25.

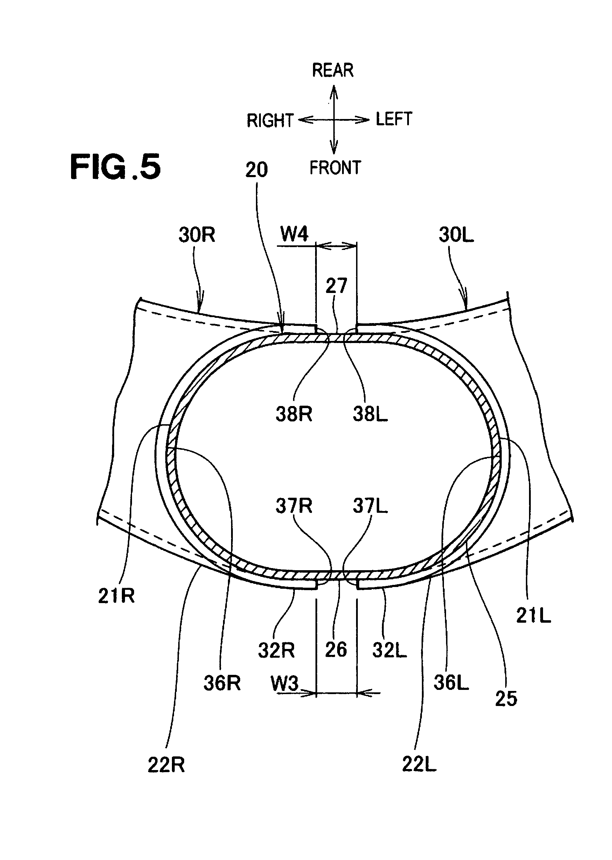

The structure of the front-end joining parts 32L, R of the lower frames 30L, R will be described with reference to FIG. 5.

As shown in FIG. 5, the main pipe 20 is formed in an oval shape (described in detail hereinafter) when viewed in cross section.

The front-end joining part 32L of the lower frame 30L has an upper U-part 36L that is cut out in a U-shape when viewed from above so as to fit to the lower-end lateral surface 21L of the main pipe 20. The front-end joining part 32R of the lower frame 30R has an upper U-part 36R that is cut out in a U-shape when viewed from above so as to fit to the lower-end lateral surface 21R of the main pipe 20.

The fitting of the upper U-parts 36L, R to the expanding tube part 25 reduces a gap W3 between a front distal end 37L of the lower frame 30L and a front distal end 37R of the lower frame 30R, and a gap W4 between a rear distal end 38L of the lower frame 30L and a rear distal end 38R of the lower frame 30R.

In FIG. 4, the lower frame 30L also includes a lower U-part 39L provided to be continuous with the lower end of the front distal end 37L. The lower frame 30R also includes a lower U-part 39R provided to be continuous with the lower end of the front distal end 37R.

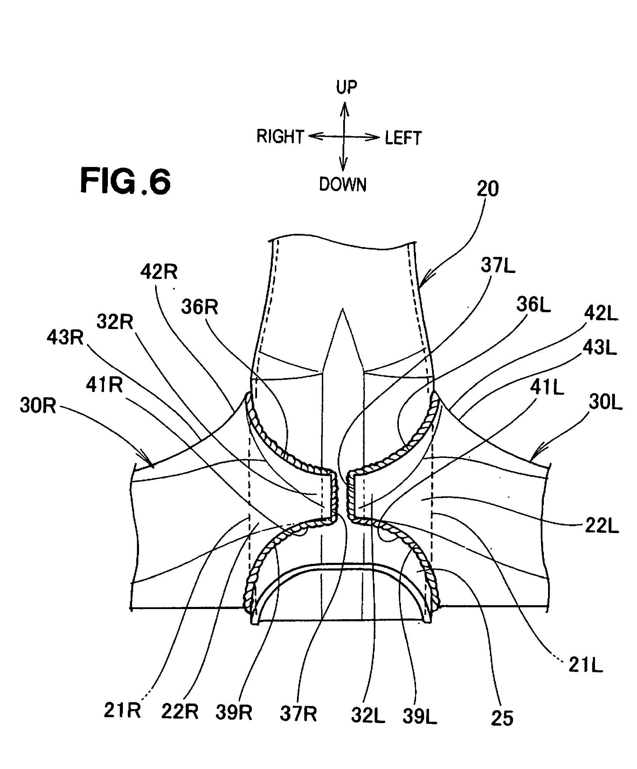

The welded parts of the expanding tube part 25 of the main pipe 20 and the front-end joining parts 32L, R of the lower frames 30L, R are described with reference to FIG. 6.

As shown in FIG. 6, fillet welding is performed between the lower-end lateral surface 21L of the expanding tube part 25 and the upper U-part 36L of the front-end joining part 32L, the front distal end 37L, and the lower U-part 39L, and a front welded part 41L is formed. Fillet welding is performed between the lower-end lateral surface 21R of the expanding tube part 25 and the upper U-part 36R of the front-end joining part 32R, the front distal end 37R, and the lower U-part 39R, and a front welded part 41R is formed. In other words, the front-end joining parts 32L, R are welded to the lower-end lateral surfaces 21L, R of the expanding tube part 25.

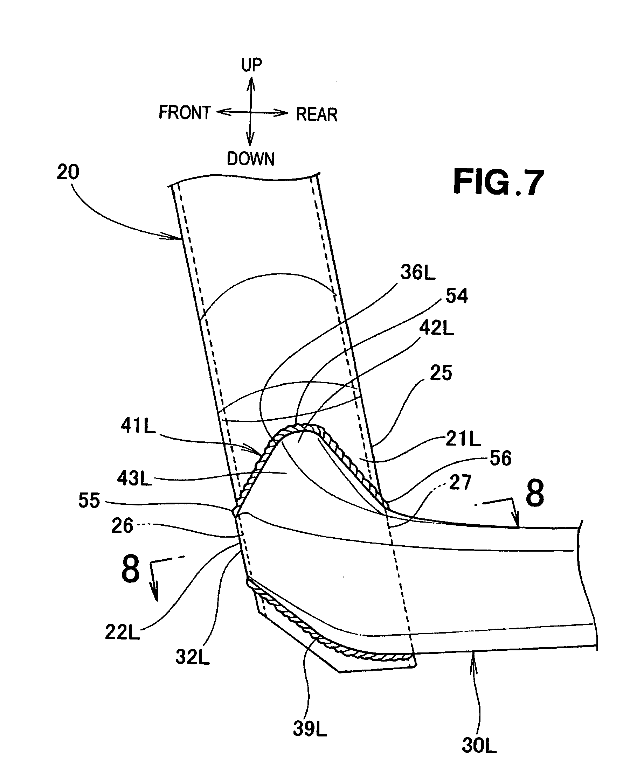

The shape of the front-end joining part 32L when viewed from the left will be described with reference to FIG. 7.

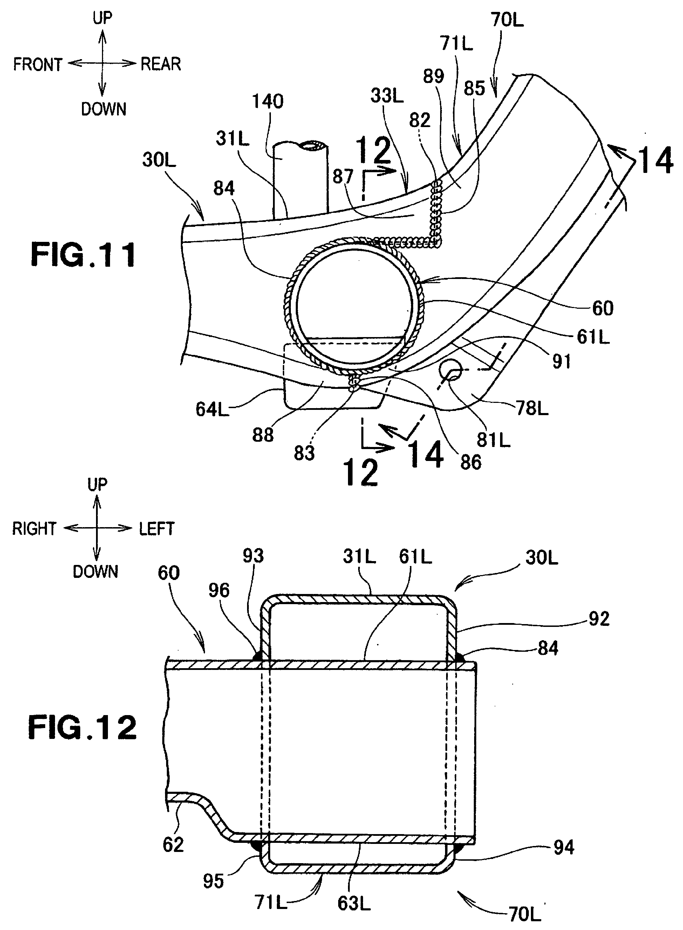

As shown in FIG. 7, when viewed from the side of the vehicle, the front-end joining part 32L has a mound-shaped bulge part 43L that is formed to bulge out in a mound shape so that an upper surface 42L protrudes upward. The mound-shaped bulge part 43L assists in providing as long weld length as possible to the front welded part 41L, causes a front-to-back center part 54 of the front welded part 41L to lean more toward the header pipe (FIG. 12, sign 12), and causes a front-end part 55 and a rear-end part 56 of the front welded part 41L to be lower than the front-to-back center part 54.

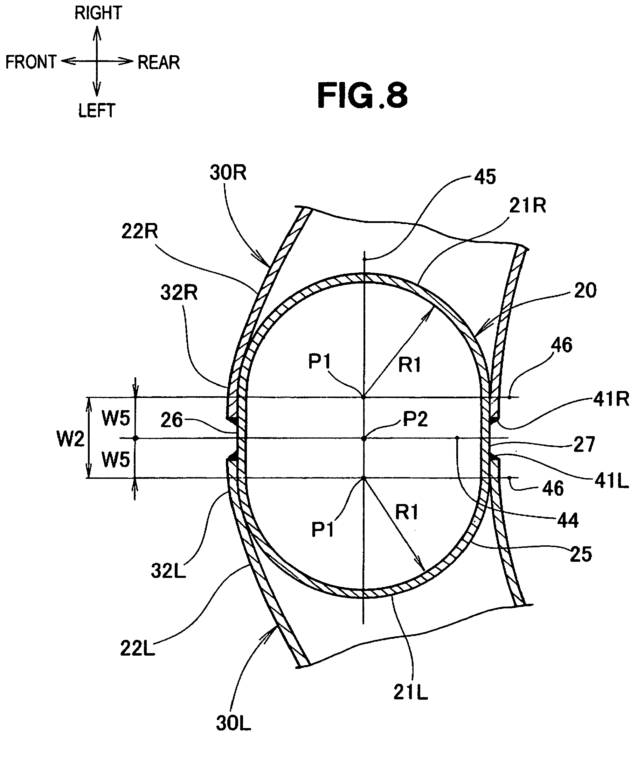

The front flat surface 26 and the rear flat surface 27 provided to the expanding tube part 25 of the main pipe 20 will be described with reference to FIG. 8.

As shown in FIG. 8, the front flat surface 26 and the rear flat surface 27 of the expanding tube part 25 are joined to the front-end joining parts 32L, R of the lower frames 30L, R by the welded parts 41R, L.

The cross-sectional shape of the expanding tube part 25 will be described next.

When the width W2 of the front flat surface 26 and the rear flat surface 27 is divided in two equal parts with reference to a lateral center line 44 of the expanding tube part 25, a width W5 is obtained. The intersections of a front-to-back center line 45 of the expanding tube part 25 and lines 46 at the width W2 are P1. When semicircles having a radius R1 are drawn with reference to the intersections P1, the radii are those of the lower-end lateral surfaces 21L, R of the expanding tube part 25. In other words, the expanding tube part 25 is an oval configured about a point P2 using the width W5 and the radius R1. The expanding tube part 25 is preferably formed in an oval shape but may also be formed in an ellipse shape.

The front-end part 22L of the lower frame 30L is formed so as to cover the lateral surface 21L in the left-and-right direction of the expanding tube part 25, and the front-end part 22R of the lower frame 30R is formed so as to cover the lateral surface 21R in the left-and-right direction of the expanding tube part 25.

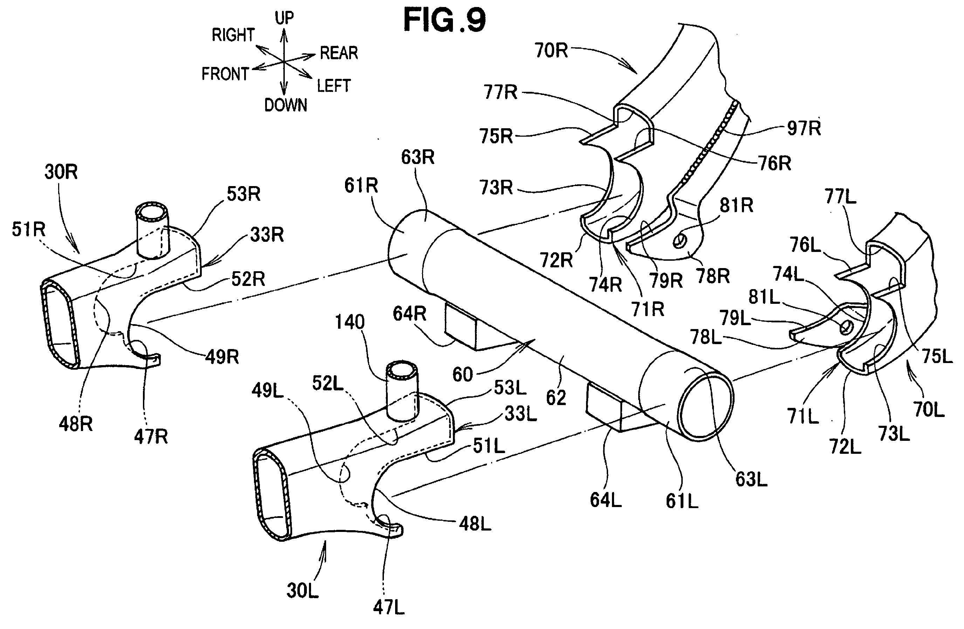

The structure of the rear-end joining parts 33L, R of the lower frames 30L, R, the cross pipe 60, and the front-end parts 71L, R of the rear frames 70L, R will be described with reference to FIG. 9.

As shown in FIG. 9, the rear-end joining part 33L of the lower frame 30L is composed of a lower-end groove surface 47L provided to the lower end and constituting a lower end and a groove of the front-end part 71L of the rear frame 70L; an outer fitting surface 48L and an inner fitting surface 49L formed in a semicircular shape continuous with the upper area of the groove surface 47L and fitted to the end circumferential surface 61L of the cross pipe 60; an outer longitudinal groove surface 51L and an inner longitudinal groove surface 52L that are provided continuously with the respective rear areas of the fitting surfaces 48L, 49L and constitute a longitudinal region and a groove of the front-end part 71L; and an upper-end groove surface 53L that is provided continuously with the rear area of the groove surfaces 51L, 52L and constitutes an upper surface and a groove of the front-end part 71L.

The rear-end joining part 33R of the lower frame 30R is composed of a lower-end groove surface 47R provided to the lower end and constituting a lower end and a groove of the front-end part 71R of the rear frame 70R; an outer fitting surface 48R and an inner fitting surface 49R that are formed in a semicircular shape continuous with the upper area of the groove surface 47R and fitted to the end circumferential surface 61R; an outer longitudinal groove surface 51R and an inner longitudinal groove surface 52R that are provided continuously with the respective rear areas of the fitting surfaces 48R, 49R and constitute a longitudinal region and a groove of the front-end part 71R; and an upper-end groove surface 53R that is provided continuously with the rear area of the groove surfaces 51R, 52R and constitutes an upper surface and a groove of the front-end part 71R.

The structure of the cross pipe 60 will be described next.

The cross pipe 60 is composed of a center part 62 that is positioned in the lateral center of the vehicle and extends in the lateral direction; an end part 63L provided to the left end of the center part 62 and including the outer circumferential surface 61L; and an end part 63R provided to the right end of the center part 62 and including the outer circumferential surface 61R. Link stoppers 64L, R are also provided to the left-end part and the right-end part of the center part 62.

The structure of the front-end parts 71L, R of the rear frames 70L, R will be described next.

The front-end part 71L of the rear frame 70L is composed of a lower-end groove surface 72L provided to the lower end and constituting the lower-end groove surface 47L and a groove of the rear-end joining part 33L; an outer fitting surface 73L and an inner fitting surface 74L that are formed in a semicircular shape continuous with the upper area of the groove surface 72L and fitted to the end circumferential surface 61L of the cross pipe 60; an outer longitudinal groove surface 75L and an inner longitudinal groove surface 76L provided continuously with the respective rear areas of the fitting surfaces 73L, 74L and constituting the groove surfaces 51L, 52L and a groove; and an upper-end groove surface 77L provided continuously with the rear area of the groove surfaces 75L, 76L and constituting the upper-end groove surface 53L and a groove.

The rear-end part 71R of the rear frame 70R is composed of a lower-end groove surface 72R provided to the lower end and constituting the lower-end groove surface 47R and a groove of the of the rear-end joining part 33R; an outer fitting surface 73R and an inner fitting surface 74R formed in a semicircular shape continuous with the upper area of the groove surface 72R and fitted to the end circumferential surface 61R of the cross pipe 60; an outer longitudinal groove surface 75R and an inner longitudinal groove surface 76R provided continuously with the respective rear areas of the fitting surfaces 73R, 74R and constituting the groove surfaces 51R, 52R and a groove; and an upper-end groove surface 77R that is provided continuously with the rear area of the groove surfaces 75R, 76R and constitutes the upper-end groove surface 53R and a groove.

Pivot joining parts 78L, R for supporting the front end of the power unit (FIG. 1, sign 104) via the engine hanger link (FIG. 1, sign 101) are welded to the inside of the respective front end parts of the rear frames 70L, R.

An engaging part 79L for engaging with the center part 62 of the cross pipe 60 is provided to the front end of the pivot joining part 78L, and a bolt-inserting hole 81L for insertion of a bolt for holding the engine hanger link in place is provided to a lateral part of the front end of the pivot joining part 78L. An engaging part 79R for engaging with the center part 62 is provided to the front end of the pivot joining part 78R, and a bolt-inserting hole 81R for insertion of a bolt for holding the engine hanger link in place is provided to a lateral part of the front end of the pivot joining part 78R.

The fitting structure of the rear-end joining parts 33L, R, the cross pipe 60, and the front-end parts 71L, R will be described next.

The fitting surfaces 48L, 49L of the rear-end joining part 33L and the fitting surfaces 73L, 74L of the front-end part 71L are fit to the end circumferential surface 61L of the cross pipe 60. The fitting surfaces 48R, 49R of the rear-end joining part 33R and the fitting surfaces 73R, 74R of the front-end part 71R are fit to the end circumferential surface 61R of the cross pipe 60.

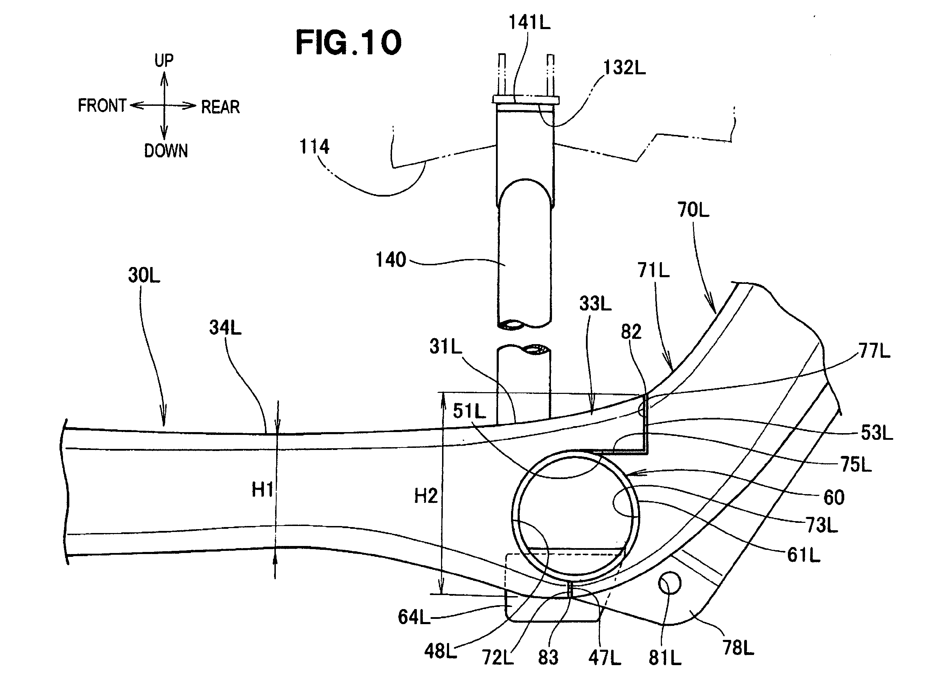

The groove configured by the rear-end joining part 33L of the lower frame 30L and the front-end part 71L of the rear frame 70L, as well as the height of the lower frame 30L, will be described with reference to FIG. 10.

As shown in FIG. 10, the fitting surface 48L of the rear-end joining part 33L and the fitting surface 73L of the front-end part 71L fit in the end circumferential surface 61L of the cross pipe 60.

An upper groove 82 formed by a fixed root gap is provided to the upper area of the cross pipe 60, and a lower groove 83 formed by a fixed root gap is provided to the lower area of the cross pipe 60. The positions of the grooves 82, 83 given in this embodiment as viewed from the side of the vehicle are simply a single example, and modifications to other positions are permissible.

The height of the lower frame 30L will be described next.

When viewed from the side of the vehicle, a height H1 of the intermediate part 34L of the lower frame 30L is smaller than a height H2 of the rear-end joining part 33L.

The welded parts of the lower frame 30L, the cross pipe 60, and the rear frame 70L will be described with reference to FIG. 11.

As shown in FIG. 11, fillet welding is performed between the end circumferential part 61L of the cross pipe 60 and both the rear-end joining part 33L of the lower frame 30L and the front-end part 71L of the rear frame 70L, and an outer girth-welded part 84 is formed. Butt welding is performed on the upper groove 82, and an upper welded part 85 is formed. Butt welding is further performed on the lower groove 83, and a lower welded part 86 is formed.

Specifically, the joined parts of the lower frame 30L, the cross pipe 60, and the rear frame 70L result from joining an upper part 87 and a lower part 88 of the rear-end joining part 33L of the lower frame 30L with an upper part 89 and a lower part 91 of the front-end part 71L of the rear frame 70L, in addition to using welding to join the lower frame 30L and the rear frame 70L to the cross pipe 60. In this embodiment, the upper part 87 and the lower part 88 of the rear-end joining part 33L are joined to the upper part 89 and the lower part 91 of the front-end part 71L, but only the upper part 87 of the rear-end joining part 33L and the upper part 89 of the front-end part 71L, or only the lower part 88 of the rear-end joining part 33L and the lower part 91 of the front-end part 71L may also be joined.

The girth-welded parts created between the cross pipe 60, the lower frame 30L, and the rear frame 70L will be described with reference to FIG. 12.

As shown in FIG. 12, the entire circumference of the end part 63L of the cross pipe 60 is joined by welding to a lateral outer surface 92 and an inner surface 93 of the rear-end part 31L of the lower frame 30L, as well as to a lateral outer surface 94 and an inner surface 95 of the front-end part 71L. The outer girth-welded part 84 is formed at the outer surfaces 92, 94, and an inner girth-welded part 96 is formed at the inner surfaces 93, 95.

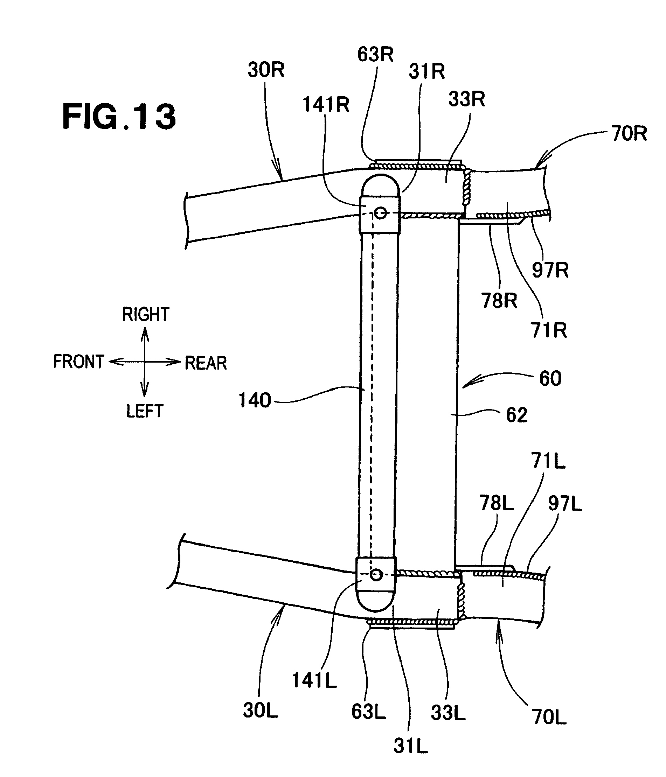

Positioning on the surface of the stowing-part-supporting member 140 and the joining structure of the lower frames 30L, R and the pivot joining parts 78L, R will be described with reference to FIG. 13.

As shown in FIG. 13, the stowing-part-supporting member 140 is positioned so as to cover the cross pipe 60 when viewed from above the vehicle.

The pivot joining part 78L is joined to an inner surface of the lower frame 30L by a welded part 97L, and the pivot joining part 78R is joined to an inner surface of the lower frame 30R by a welded part 97R.

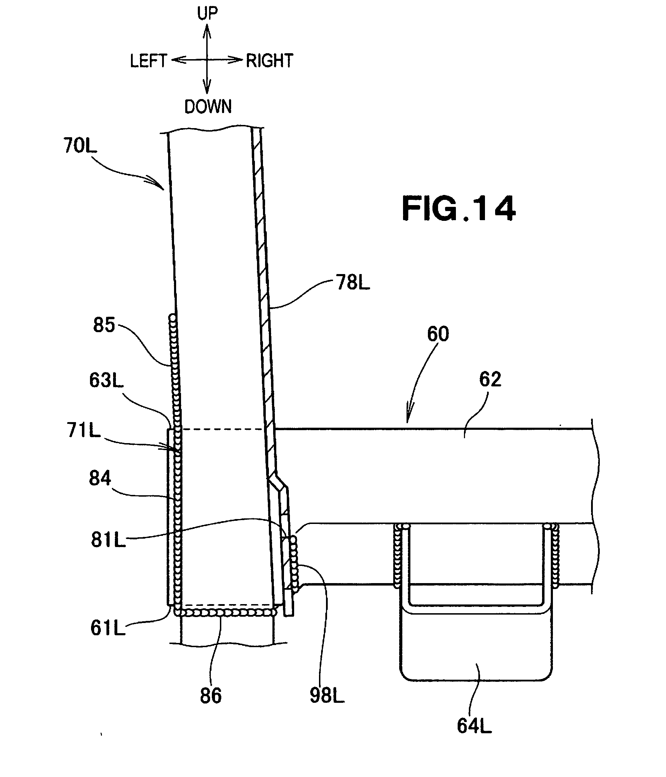

The structure for joining the cross pipe 60 and the pivot joining part 78L will be described with reference to FIG. 14.

As shown in FIG. 14, fillet welding is performed between the lower part of the pivot joining part 78L and the center part 62 of the cross pipe 60, and a welded part 98L is formed. In other words, the pivot joining part 78L is also welded to the outer circumferential surface 61L of the cross pipe 60 in addition to being welded to the inside of the front-end part (FIG. 13, sign 71L) of the rear frame 70L.

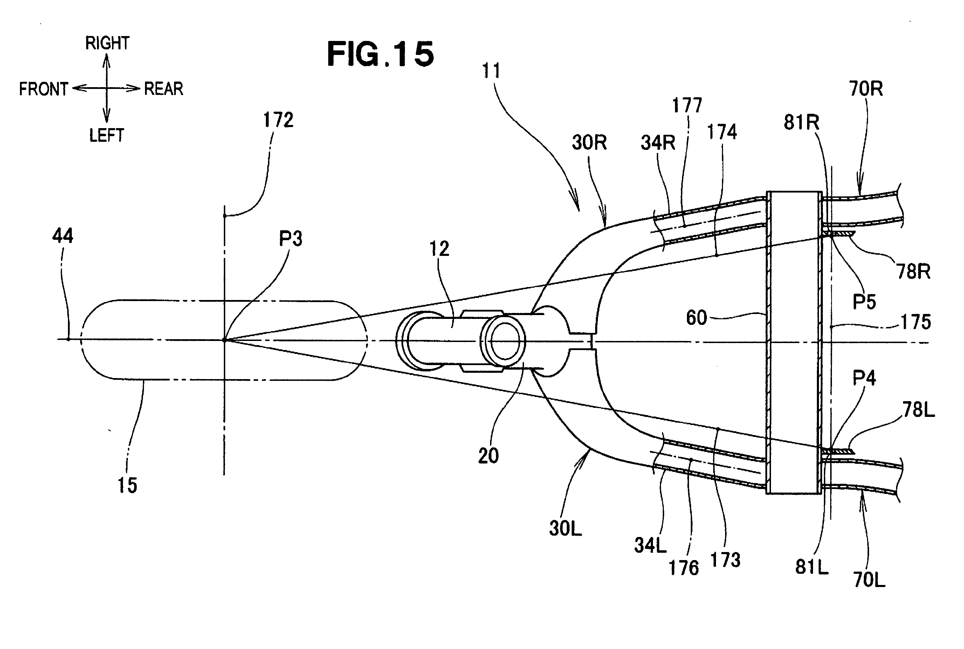

The shape of the intermediate parts 34L, R of lower frames 30L, R as viewed from above will be described with reference to FIG. 15.

As shown in FIG. 15, when viewed from above the vehicle, a line 173 is drawn from a front-wheel center point P3, which is at the intersection between a center line 172 of the front wheel (FIG. 1, sign 14) and the lateral center line 44, to a center point P4 of the hole 81L of the pivot joining part 78L, and a line 174 is drawn from the center point P3 to a center point P5 of the hole 81R of the pivot joining part 78R.

The line 173 links the points P3, P4, and the line 174 links the points P3, P5, whereby the center point P4 of the hole 81L of the pivot joining part 78L, the front-wheel center point P3, and the center point P5 of the hole 81R of the pivot joining part 78R are linked in a V-shape. The V-shaped lines 173, 174 are parallel to the respective intermediate parts 34L, R of the lower frames 30L, R.

The operational effects of the scooter-type vehicle 10 above will be described below.

According to the configuration of FIG. 11, the parts 87, 88 of the lower frame 30L and the parts 89, 91 of the rear frame 70L are joined in addition to the joining of the lower frame 30L and the rear frame 70L to the cross pipe 60. When loads are applied to the lower frame 30L and the rear frame 70L, these loads are not received solely by the cross pipe 60 but also by both the lower frame 30L and the rear frame 70L, and therefore loads can be prevented from concentrating excessively at the cross pipe 60.

According to the configuration of FIG. 12, the entire circumference of the end part 63L of the cross pipe 60 is joined to the outer surface 92 and the inner surface 93 of the rear-end part 31L of the lower frame 30L, and to the outer surface 94 and the inner surface 95 of the front-end part 71L of the rear frame 70L. In other words, the lower frame 30L and the rear frame 70L cover the entire circumference of the end part 63L of the cross pipe 60 and are joined to the cross pipe 60.

The cross pipe 60 is reinforced by the lower frame 30L and the rear frame 70L, and therefore the cross pipe 60 can be made thinner.

According to the configuration of FIG. 10, the height H1 of the intermediate part 34L in the lower frame 30L is made smaller than the height H2 of the rear-end joining part 33L.

The rear-end joining part 33L is joined to other members, and the rigidity must therefore be increased. The height H2 is increased, and the rigidity is increased. Increased rigidity is not necessary for the intermediate part 34L, and the height H1 thereof is reduced.

When the intermediate part 34L and the rear-end joining part 33L are made to have the same height for hypothetical purposes, the lower frame 30L is increased in size and weight, but when the height H1 of the intermediate part 34L is made smaller, as in the present invention, the size and weight of the lower frame 30L are reduced.

According to the configuration of FIG. 13, the stowing-part-supporting member 140 is joined to both the rear-end parts 31L, R of the lower frames 30L, R, and, when viewed from above the vehicle, the stowing-part-supporting member 140 is positioned over the cross pipe 60.

Downward loads resulting from the stowing part are supported by the stowing-part-supporting member 140. The stowing-part-supporting member 140 is supported by the rear-end parts 31L, R of the lower frames 30L, R and the cross pipe 60. When the stowing-part-supporting member 140 is supported by the intermediate parts of the lower frames 30L, R or the intermediate parts of the rear frames 70L, R for hypothetical purposes, the rigidity of the lower frames 30L, R or the rear frames 70L, R must be increased.

In the present invention, the stowing-part-supporting member 140 is supported by the rear-end parts 31L, R of the lower frames 30L, R, which have increased rigidity, and the cross pipe 60, which has high rigidity and is reinforced by the lower frames 30L, R and the rear frames 70L, R. The rigidity of the cross pipe 60, the lower frames 30L, R, and the rear frames 70L, R therefore need not be further increased, and increases in the weight of these components can be limited.

According to the configuration of FIG. 4, the main pipe 20 includes the expanding tube part 25, which opens outward in the lateral direction at the bottom end. Additionally, according to the configuration of FIG. 8, the front-end parts 22L, R of the left and right lower frames 30L, R are both joined to the expanding tube part 25.

The cross-sectional area of the expanding tube part 25 is larger than the cross-sectional area near the header-pipe connection of the main pipe 20, and therefore stress generated at the lower end of the main pipe 20 is reduced. As a result, the main pipe 20 can be made thinner and lighter. The cross-sectional area of the lower end of the main pipe 20 is increased, and therefore the main pipe 20 and the lower frames 30L, R need not be reinforced. A frame structure that can be lightened without reinforcement can therefore be provided.

According to the configuration of FIG. 15, when viewed from above the vehicle, drawing the line 173 from the center point P3 of the front wheel 15 to the hole center P4 of the left pivot joining part 78L, and the line 174 from the center point P3 to the hole center P5 of the right pivot joining part 78R links the left hole center P4, the center point P3 of the front wheel, and the right hole center P5 into a V-shape, the intermediate parts 34L, R of the left and right lower frames 30L, R being parallel to the respective V-shaped lines 173, 174.

Since the V-shaped lines 173, 174 are parallel to the respective intermediate parts 34L, R of the lower frames 30L, R, when lateral loads are applied to the vertex of the V-shape (the front-wheel center point P3), a tensile force acts on the intermediate part 34L of the lower frame 30L on the one hand, and a compressive force acts on the intermediate part 34R of the lower frame 30R on the other. Since force is applied to the intermediate part 34L as an axial force along a center line 176 of the intermediate part 34L of the lower frame 30L and to the intermediate part 34R as an axial force along a center line 177 of the intermediate part 34R of the lower frame 30R, the lower frames 30L, R do not appreciably bend, and deformations of the left and right lower frames 30L, R can be limited.

According to the configuration of FIG. 8, the front-end part 22L of the lower frame 30L is formed so as to cover the lateral surface 21L in the left-and-right direction of the expanding tube part 25, and the front-end part 22R of the lower frame 30R is formed so as to cover the lateral surface 21R in the left-and-right direction of the expanding tube part 25.

Since the front-end parts 22L, R of the lower frames 30L, R are used to cover the lateral surfaces 21L, R in the left-and-right direction of the expanding tube part 25, the cross-sectional area of the front-end parts 22L, R is added to the cross-sectional area of the expanding tube part 25, and the rigidity of the expanding tube part 25 can be further increased.

According to the configuration shown in FIG. 13, the cross pipe 60 is joined to both of the rear-end parts 31L, R of the lower frames 30L, R, and the front-end parts 71L, R of the pair of the rear frames 70L, R are joined respectively to the end parts 63L, R of the cross pipe 60.

The cross pipe 60 is provided to the area between the lower frame 30L and the rear frame 70L and between the lower frame 30R and the rear frame 70R, and the rigidity of the entire frame therefore increases.

As shown in FIG. 5, fitting the upper U-parts 36L, R, which are cut out in a U-shape, to the expanding tube part 25 reduces the gaps W3, W4 between the distal ends 37L, 38L of the lower frame 30L and the distal ends 37R, 38R of the lower frame 30R. As shown in FIG. 7, the mound-shaped bulge part 43L, which is formed to bulge out in a mound shape, assists in providing an as long weld length as possible to the front welded part 41L.

The expanding tube part 25 can be nearly surrounded by the front-end parts 22L, R of the lower frames 30L, R. The expanding tube part 25 is therefore reinforced by the lower frames 30L, R, and a frame structure that is robust to torsion can be obtained even when the expanding tube part 25 is thin.

The thickness of the lower frames 30R, L and the rear frames 70R, L in FIG. 2 is usually 2.0 to 3.0 mm, but applying the joining structure given in the embodiment allows the thickness to be 1.0 to 2.0 mm.

### INDUSTRIAL APPLICABILITY

The frame structure of the present invention is suitable for use on a scooter-type vehicle.

### REFERENCE SIGNS LIST

- 10:: Scooter-type vehicle
- 11:: Vehicle frame
- 12:: Header pipe
- 13:: Front fork
- 15:: Front wheel
- 16:: Handles
- 20:: Main pipe
- 21L, 21R:: Left and right lateral surfaces
- 25:: Expanding tube part
- 30L, 30R:: Lower frames
- 31L, 31R:: Rear-end parts
- 32L, 32R:: Front-end joining parts
- 33L, 33R:: Rear-end joining parts
- 34L, 34R:: Intermediate parts
- 44:: Lateral center
- 60:: Cross pipe
- 61L, 61R:: End circumferences (end circumferential surfaces)
- 63L, 63R:: Left and right end parts
- 70L, 70R:: Rear frames
- 71L, 71R:: Front-end parts
- 78L, 78R:: Pivot joining parts
- 87, 89:: Parts (upper parts)
- 88, 91:: Parts (lower parts)
- 92, 94:: Outer surfaces
- 93, 95:: Inner surfaces
- 106:: Engine
- 114:: Stowing part
- 140:: Stowing-part-supporting member
- 173, 174:: Lines
- H1, H2:: Heights
- P3:: Center point
- P4, P5:: Hole centers

## Claims

1. A frame structure for a scooter-type vehicle (10), comprising:
a header pipe (12) for steerably supporting a handle (16) and a front fork (13), the handle being grasped by a driver, and the front fork being connected to the handle;
a hollow main pipe (20) extending downward from the header pipe toward the rear of the vehicle;
a pair of left and right lower frames (30L, 30R) joined to a lower part of the main pipe and both extending from the lower part of the main pipe toward the rear of the vehicle;
a cross pipe (60) joined to both rear-end parts (31L, 31R) of the lower frames and extending in a lateral direction; and
a pair of left and right rear frames (70L, 70R) extending upward and to the rear of the vehicle, front-end parts (71L, 71R) of the rear frames being joined to respective left and right ends parts (63L, 63R) of the cross pipe,
the lower frames and the rear frames being joined to the cross pipe;
**characterized in that** one of the lower frames and one of the rear frames are joined directly to each other by welding.

2. The frame structure for a scooter-type vehicle according to claim 1, wherein an entire circumference of the end parts of the cross pipe is joined to a laterally outer surface (92) and a laterally inner surface (93) of the rear-end parts of the lower frames, and is joined to a laterally outer surface (94) and a laterally inner surface (95) of the front-end parts of the rear frames.

3. The frame structure for a scooter-type vehicle according to claim 1 or 2, wherein the lower frames comprises:
a front-end joining part (32L) joined to a lower end of the main pipe;
a rear-end joining part (33L) joined to a part of the rear frames and an end circumference of the cross pipe; and
an intermediate part (34L) provided to an area between the front-end joining part and the rear-end joining part, and
a height (H1) of the intermediate part is smaller than a height (H2) of the rear-end joining part.

4. The frame structure for a scooter-type vehicle according to any of claims 1 through 3, wherein
a stowing-part-supporting member (140) for supporting a stowing part(132L; 132R) for stowing objects is joined to the rear-end parts of both of the left and right lower frames separately from the cross pipe; and
the stowing-part-supporting member is positioned over the cross pipe.

5. The frame structure for a scooter-type vehicle according to any of claims 3 or 4, wherein the main pipe comprises an expanding tube part (25) expanding in the lateral direction to the lower end, the front-end joining part of the lower frames being welded to left and right lateral surfaces of the expanding tube part.

6. The frame structure for a scooter-type vehicle according to any one of claims 1 through 5, wherein
a line (173) is drawn from a center point (P3) of a front wheel (15) to a center (P4) of a hole in a left pivot-joining part (78L), the front wheel being rotatably attached to a lower end of the front fork, and the left pivot-joining part being welded to the front-end part of the left rear frame in order to support an engine; and
a line (174) is drawn from the center point to a center (P5) of a hole in a right pivot-joining part (78R) welded to the front-end part of the right rear frame in order to support the engine, whereby
the left hole center, the center point of the front wheel, and the right hole center are linked into a V-shape; and
the intermediate parts (34L, 34R) of the left and right lower frames (30L, 30R) are parallel to the lines of the V-shape.

## Patentansprüche

1. Eine Rahmenstruktur für ein Fahrzeug vom Rollertyp (10), die folgende Merkmale aufweist:
ein Sammelrohr (12) zum lenkbaren Tragen eines Griffs (16) und einer Vordergabel (13), wobei der Griff von einem Fahrer gegriffen wird und die Vordergabel mit dem Griff verbunden ist;
ein hohles Hauptrohr (20), das sich von dem Sammelrohr zu der Rückseite des Fahrzeugs nach unten erstreckt;
ein Paar von linken und rechten unteren Rahmen (30L, 30R), die mit einem unteren Teil des Hauptrohrs verbunden sind und sich beide von dem unteren Teil des Hauptrohrs zu der Rückseite des Fahrzeugs erstrecken;
ein Querrohr (60), das mit beiden Hinteres-Ende-Teilen (31 L, 31 R) der unteren Rahmen verbunden ist und sich in einer seitlichen Richtung erstreckt; und
ein Paar von linken und rechten hinteren Rahmen (70L, 70R), die sich nach oben und zu der Rückseite des Fahrzeugs erstrecken, wobei Vorderes-Ende-Teile (71 L, 71 R) der hinteren Rahmen mit jeweiligen linken und rechten Endteilen (63L, 63R) des Querrohrs verbunden sind, wobei die unteren Rahmen und die hinteren Rahmen mit dem Querrohr verbunden sind;
**dadurch gekennzeichnet, dass** einer der unteren Rahmen und einer der hinteren Rahmen durch Schweißen direkt miteinander verbunden sind.

2. Die Rahmenstruktur für ein Fahrzeug vom Rollertyp gemäß Anspruch 1, bei der ein gesamter Umfang der Endteile des Querrohrs mit einer seitlich äußeren Oberfläche (92) und einer seitlich inneren Oberfläche (93) der Hinteres-Ende-Teile der unteren Rahmen verbunden ist, und mit einer seitlich äußeren Oberfläche (94) und einer seitlich inneren Oberfläche (95) der Vorderes-Ende-Teile der hinteren Rahmen verbunden ist.

3. Die Rahmenstruktur für ein Fahrzeug vom Rollertyp gemäß Anspruch 1 oder 2, bei der die unteren Rahmen folgende Merkmale aufweisen:
ein Vorderes-Ende-Verbindungsteil (32L), das mit einem unteren Ende des Hauptrohrs verbunden ist;
ein Hinteres-Ende-Verbindungsteil (33L), das mit einem Teil der hinteren Rahmen und einem Endumfang des Querrohrs verbunden ist; und
ein Zwischenteil (34L), das an einem Bereich zwischen dem Vorderes-Ende-Verbindungsteil und dem Hinteres-Ende-Verbindungsteil vorgesehen ist, und
wobei eine Höhe (H1) des Zwischenteils geringer ist als eine Höhe (H2) des Hinteres-Ende-Verbindungsteils.

4. Die Rahmenstruktur für ein Fahrzeug vom Rollertyp gemäß einem der Ansprüche 1 bis 3, bei der
ein Verstauungsteil-Tragebauglied (140) zum Tragen eines Verstauungsteils (132L; 132R) zum Verstauen von Objekten mit den Hinteres-Ende-Teilen sowohl des linken als auch des rechten unteren Rahmens getrennt von dem Querrohr verbunden ist; und
das Verstauungsteil-Tragebauglied über dem Querrohr positioniert ist.

5. Die Rahmenstruktur für ein Fahrzeug vom Rollertyp gemäß einem der Ansprüche 3 oder 4, bei der das Hauptrohr ein Ausdehnungsrohrteil (25) aufweist, das sich in der seitlichen Richtung zu dem unteren Ende ausdehnt, wobei das Vorderes-Ende-Verbindungsteil der unteren Rahmen an linke und rechte seitliche Oberflächen des Ausdehnungsröhrenteils geschweißt ist.

6. Die Rahmenstruktur für ein Fahrzeug vom Rollertyp gemäß einem der Ansprüche 1 bis 5, bei der
eine Linie (173) gezogen wird von einem Mittelpunkt (P3) eines Vorderrads (15) zu einer Mitte (P4) eines Lochs in einem linken Schwenkverbindungsteil (78L), wobei das Vorderrad drehbar an einem unteren Ende der Vordergabel angebracht ist, und das linke Schwenkverbindungsteil an das Vorderes-Ende-Teil des linken hinteren Rahmens geschweißt ist, um einen Motor zu tragen; und
eine Linie (174) gezogen wird von dem Mittelpunkt zu einer Mitte (P5) eines Lochs in einem rechten Schwenkverbindungsteil (78R), das an das Vorderes-Ende-Teil des rechten hinteren Rahmens geschweißt ist, um den Motor zu tragen, wobei
die linke Lochmitte, der Mittelpunkt des Vorderrads und die rechte Lochmitte in einer V-Form verbunden sind; und
die Zwischenteile (34L, 34R) des linken und rechten unteren Rahmens (30L, 30R) parallel zu den Linien der V-Form sind.

## Revendications

1. Structure de cadre pour un véhicule de type scooter (10), comprenant :
un tube collecteur (12) pour supporter de manière manoeuvrable un guidon (16) et une fourche avant (13), le guidon étant saisi par un conducteur, et la fourche avant étant connectée au guidon ;
un tube principal creux (20) s'étendant vers le bas depuis le tube collecteur vers l'arrière du véhicule ;
une paire de cadres inférieurs gauche et droit (30L, 30R) reliés à une partie inférieure du tube principal et s'étendant tous les deux depuis la partie inférieure du tube principal vers l'arrière du véhicule ;
un tube transversal (60) relié aux deux parties d'extrémité arrière (31L, 31R) des cadres inférieurs et s'étendant dans une direction latérale ; et
une paire de cadres arrière gauche et droit (70L, 70R) s'étendant vers le haut et jusqu'à l'arrière du véhicule, des parties d'extrémité avant (71L, 71R) des cadres arrière étant reliées à des parties d'extrémité gauche et droite respectives (63L, 63R) du tube transversal, les cadres inférieurs et les cadres arrière étant reliés au tube transversal ;
**caractérisée en ce que** l'un des cadres inférieurs et l'un des cadres arrière sont reliés directement l'un à l'autre par soudage.

2. Structure de cadre pour un véhicule de type scooter selon la revendication 1, dans laquelle une circonférence entière des parties d'extrémité du tube transversal est reliée à une surface latéralement extérieure (92) et à une surface latéralement intérieure (93) des parties d'extrémité arrière des cadres inférieurs, et est reliée à une surface latéralement extérieure (94) et à une surface latéralement intérieure (95) des parties d'extrémité avant des cadres arrière.

3. Structure de cadre pour un véhicule de type scooter selon la revendication 1 ou 2, dans laquelle les cadres inférieurs comprennent :
une partie de liaison d'extrémité avant (32L) reliée à une extrémité inférieure du tube principal ;
une partie de liaison d'extrémité arrière (33L) reliée à une partie des cadres arrière et à une circonférence d'extrémité du tube transversal ; et
une partie intermédiaire (34L) située sur une zone entre la partie de liaison d'extrémité avant et la partie de liaison d'extrémité arrière, et
une hauteur (H1) de la partie intermédiaire est inférieure à une hauteur (H2) de la partie de liaison d'extrémité arrière.

4. Structure de cadre pour un véhicule de type scooter selon l'une quelconque des revendications 1 à 3, dans laquelle
un organe de support de partie de rangement (140) pour supporter une partie de rangement (132L ; 132R) pour ranger des objets est relié aux parties d'extrémité arrière des deux des cadres inférieurs gauche et droit séparément du tube transversal ; et
l'organe de support de partie de rangement est positionné par-dessus le tube transversal.

5. Structure de cadre pour un véhicule de type scooter selon l'une quelconque des revendications 3 ou 4, dans laquelle le tube principal comprend une partie de tube d'extension (25) s'étendant dans la direction latérale jusqu'à l'extrémité inférieure, la partie de liaison d'extrémité avant des cadres inférieurs étant soudée aux surfaces latérales gauche et droite de la partie de tube d'extension.

6. Structure de cadre pour un véhicule de type scooter selon l'une quelconque des revendications 1 à 5, dans laquelle
une ligne (173) est tirée depuis un point central (P3) d'une roue avant (15) jusqu'à un centre (P4) d'un trou dans une partie de liaison de pivot gauche (78L), la roue avant étant attachée en rotation à une extrémité inférieure de la fourche avant, et la partie de liaison de pivot gauche étant soudée à la partie d'extrémité avant du cadre arrière gauche afin de supporter un moteur ; et
une ligne (174) est tirée depuis le point central jusqu'à un centre (P5) d'un trou dans une partie de liaison de pivot droite (78R) soudée à la partie d'extrémité avant du cadre arrière droit afin de supporter le moteur, moyennant quoi
le centre de trou gauche, le point central de la roue avant et le centre de trou droit sont liés en une forme de V ; et
les parties intermédiaires (34L, 34R) des cadres inférieurs gauche et droit (30L, 30R) sont parallèles aux lignes de la forme en V.
